# EUROPEAN PATENT SPECIFICATION

(11) **EP 4 303 266 B1**
(45) Date of publication and mention of the grant of the patent: **12.08.2026**
(21) Application number: 22762990.4
(22) Date of filing: 17.02.2022
(51) Int. Cl.: C08L 67/02, C08L 101/16, C08K 3/013, C08G 63/02

(54) **BIODEGRADABLE RESIN COMPOSITION AND MOLDED PRODUCT THEREOF**
BIOLOGISCH ABBAUBARE HARZZUSAMMENSETZUNG UND FORMPRODUKT DARAUS
COMPOSITION DE RÉSINE BIODÉGRADABLE ET PRODUIT MOULÉ ASSOCIÉ

(30) Priority: 02.03.2021 JP 2021032417
(43) Date of publication of application: 10.01.2024
(73) Proprietor: DIC CORPORATION, Itabashi-ku Tokyo 174-8520 (JP)
(72) Inventor: MIURA, Yurika, Ichihara-shi, Chiba 290-8585 (JP); NOGUCHI, Takafumi, Ichihara-shi, Chiba 290-8585 (JP); TOKORO, Hiroki, Ichihara-shi, Chiba 290-8585 (JP)
(74) Representative: Kraus & Lederer PartGmbB
(86) International application number: PCT/JP2022/006297
(87) International publication number: WO 2022/185934

(56) References cited:
- WO-A1-2013/069365
- WO-A1-2014/157507
- WO-A1-2020/066651
- JP-A- 2006 052 342
- JP-A- 2010 149 025
- JP-A- 2014 139 264
- JP-A- 2014 156 539
- JP-A- 2020 122 131
- JP-B1- 5 302 474
- US-A1- 2019 185 662

## Description

### TECHNICAL FIELD

The present invention relates to a biodegradable resin composition and a molded product of the composition.

### BACKGROUND ART

Disposable containers, disposable packaging materials, and the like are generally molded from a resin composition containing a general-purpose plastic and an inorganic filler, and the inorganic filler imparts various functions, such as impact resistance, bending resistance, dimensional stability, and moisture permeability.

In a resin composition containing the inorganic filler, a further increase in the amount of the inorganic filler filled is required for enhancing the functionality and reducing the amount of the plastic. On the other hand, when the amount of the inorganic filler is increased, there has been a problem in that the fluidity of the composition decreases, leading to reduction in moldability. Solution to the problem has been proposed by addition of a fluidity modifier (PTLs 1 and 2).

Other examples of resin compositions comprising a biodegradable resin, an inorganic filler and fluidity modifier are disclosed in PTL 3 to PTL 7.

### CITATION LIST

### PATENT LITERATURE

PTL 1: JP 2005-154594 A
PTL 2: WO 08/078413
PTL 3: US 2019/185662 A1
PTL 4: WO 2013/069365 A1
PTL 5: JP 5 302474 B1
PTL 6: WO 2020/066651 A1
PTL 7: JP 2014 156539 A

### SUMMARY OF INVENTION

### TECHNICAL PROBLEM

In these days when the sustainability is focused, a movement of replacing general-purpose plastics with biodegradable resins is accelerated, but a biodegradable resin typically has high polarity, and thus has poor fluidity and tends to be less compatible with an inorganic filler. Then, there has been a problem in that the fluidity modifiers of PTLs 1 and 2 still do not exhibit a sufficient fluidity improving effect.

The problem that the present invention is to solve is to provide a biodegradable resin composition having a high fluidity.

### SOLUTION TO PROBLEM

As a result of intensive and extensive studies for solving the problem, the present inventors have found that, by using a polyester having a specific structure and specific physical properties as a fluidity modifier, a high fluidity can be imparted to a biodegradable resin composition containing an inorganic filler and a biodegradable resin, thus completing the present invention.

Specifically, the present invention provides the biodegradable resin composition defined in claim 1 and a molded product thereof.

### ADVANTAGEOUS EFFECTS OF INVENTION

According to the present invention, it is possible to provide a biodegradable resin composition having a high fluidity.

### DESCRIPTION OF EMBODIMENTS

An embodiment of the present invention will be described below. The present invention is not limited to the following embodiment, and can be implemented with a modification appropriately made to the extent that the effect of the present invention is not impaired.

### [Biodegradable resin composition]

The biodegradable resin composition of the present invention is defined in claim 1 and contains a biodegradable resin, an inorganic filler, and a fluidity modifier, the fluidity modifier being a polyester that has a carboxy group at at least one end and has an acid value of more than 50.

In the present invention, the "biodegradable resin" means a resin that can be degraded to a molecular level by the action of microorganisms present in soil, water, and sea and is as specified in claim 1. The biodegradable resin generally has a high polarity and has a property of easily increasing in viscosity due to the entanglement of the molecular chains.

The biodegradable composition of the present invention contains as a fluidity modifier a polyester that has a specific acid value and has a carboxy group at at least one end. It is considered that the carboxy group in the polyester is adsorbed on the inorganic filler while the acid value of the polyester itself secures the compatibility to the biodegradable resin having a high polarity, and thus, the fluidity of the inorganic filler is enhanced.

The components contained in the biodegradable resin composition of the present invention will be described below.

### (Fluidity modifier)

The fluidity modifier contained in the biodegradable resin composition of the present invention (hereinafter sometimes referred to as "the fluidity modifier of the present invention") is a polyester that has a carboxy group at at least one end and has an acid value of more than 50, and a polyester represented by the following general formula (1) and/or a polyester represented by the following general formula (2). 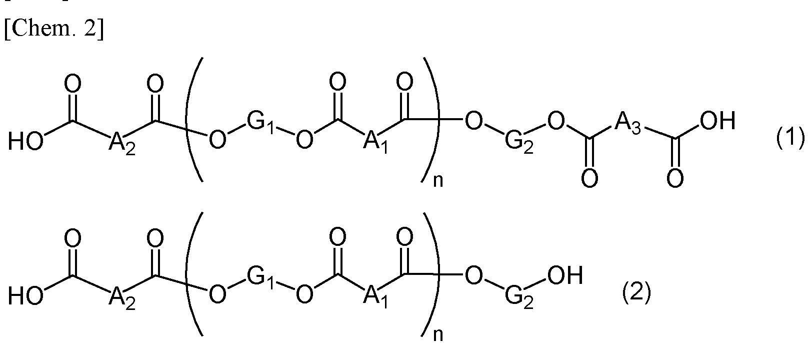 wherein in the general formulae (1) and (2),
A₁, A₂, and A₃ are each independently an aliphatic dibasic acid residue having 2 to 12 carbon atoms or an aromatic dibasic acid residue having 6 to 15 carbon atoms,
G₁ and G₂ are each independently an aliphatic diol residue having 2 to 9 carbon atoms, and
n represents the number of repeating units and is an integer in the range of 0 to 20,
provided that A₁ and G₁ may be the same or different for each repeating unit in parentheses

**In** the present invention, the "dibasic acid residue" is an organic group obtained by removing the basic acid functional groups from a dibasic acid. For example, when the dibasic acid residue is a dicarboxylic acid residue, the dicarboxylic acid residue represents an organic group that remains after removing the carboxy groups of the dicarboxylic acid. The number of carbon atoms of the dicarboxylic acid residue does not include the carbon atom in the carboxy groups.

**In** the present invention, the "diol residue" represents an organic group that remains after removing the hydroxy groups from the diol.

**In** the present invention, the "hydroxycarboxylic acid residue" represents an organic group that remains after removing the hydroxy group and the carboxy group from the hydroxycarboxylic acid. The number of carbon atoms of the hydroxycarboxylic acid residue does not include the carbon atom in the carboxy group.

The aliphatic dibasic acid residue having 2 to 12 carbon atoms as A, A₁, A₂, and A₃ may contains an alicyclic structure and/or an ether bond (-O-).

The aliphatic dibasic acid residue having 2 to 12 carbon atoms as A, A₁, A₂ and A₃ is preferably an aliphatic dicarboxylic acid residue having 2 to 12 carbon atoms, and examples of the aliphatic dicarboxylic acid residue having 2 to 12 carbon atoms include a succinic acid residue, an adipic acid residue, a maleic acid residue, a pimelic acid residue, a suberic acid residue, an azelaic acid residue, a sebacic acid residue, a cyclohexanedicarboxylic acid residue, a dodecanedicarboxylic acid residue, and a hexahydrophthalic acid residue.

The aliphatic dibasic acid residue having 2 to 12 carbon atoms as A, A₁, A₂, and A₃ is preferably an aliphatic dicarboxylic acid residue having 2 to 10 carbon atoms, more preferably a succinic acid residue, a sebacic acid residue, a maleic acid residue, or an adipic acid residue, and further preferably a succinic acid residue, a sebacic acid residue, or a maleic acid residue.

The aromatic dibasic acid residue having 6 to 15 carbon atoms as A, A₁, A₂, and A₃ is preferably an aromatic dicarboxylic acid residue having 6 to 15 carbon atoms, and an example thereof is a phthalic acid residue.

A, A₁, A₂, and A₃ is preferably an aliphatic dibasic acid residue having 2 to 12 carbon atoms, more preferably an aliphatic dicarboxylic acid residue having 2 to 12 carbon atoms, and further preferably an aliphatic dicarboxylic acid residue having 2 to 10 carbon atoms.

Examples of the aliphatic diol residue having 2 to 9 carbon atoms as G, G₁, and G₂ include an ethylene glycol residue, a 1,2-propylene glycol residue, a 1,3-propylene glycol residue, a 1,2-propanediol residue, a 1,3-propanediol residue, a 1,2-butanediol residue, a 1,3-butanediol residue, a 2-methyl-1,3-propanediol residue, a 1,4-butanediol residue, a 1,5-pentanediol residue, a 2,2-dimethyl-1,3-propanediol (neopentyl glycol) residue, a 2,2-diethyl-1,3-propanediol (3,3-dimethylolpentane) residue, a 2-n-butyl-2-ethyl-1,3-propanediol (3,3-dimethylolheptane) residue, a 3-methyl-1,5-pentanediol residue, a 1,6-hexanediol residue, a 2,2,4-trimethyl-1,3-pentanediol residue, a 2-ethyl-1,3-hexanediol residue, a 2-methyl-1,8-octanediol residue, and a 1,9-nonanediol residue.

The aliphatic diol residue having 2 to 9 carbon atoms as G, G₁, and G₂ may contain an alicyclic structure and/or an ether bond (-O-).

Examples of the aliphatic diol residue having 2 to 9 carbon atoms that contains an alicyclic structure include a 1,3-cyclopentanediol residue, a 1,2-cyclohexanediol residue, a 1,3-cyclohexanediol residue, a 1,4-cyclohexanediol residue, a 1,2-cyclohexanedimethanol residue, and a 1,4-cyclohexanedimethanol residue.

Examples of the aliphatic diol residue having 2 to 9 carbon atoms that contains an ether bond include a diethylene glycol residue, a triethylene glycol residue, a tetraethylene glycol residue, a dipropylene glycol residue, and a tripropylene glycol residue.

The aliphatic diol residue having 2 to 9 carbon atoms as G, G₁, and G₂ is preferably an aliphatic diol residue having 3 to 8 carbon atoms, more preferably an ethylene glycol residue, a diethylene glycol residue, or a 1,2-propylene glycol residue, a 1,6-hexanediol, a 3-methyl-1,5-pentanediol, a 1,4-butanediol, or a 1,3-butanediol residue.

Examples of the hydroxycarboxylic acid residue having 2 to 18 carbon atoms as L include residues of a hydroxycarboxylic acid in which one hydroxy group substitutes on the aliphatic chain of an aliphatic carboxylic acid having 3 to 19 carbon atoms, such as propionic acid, butyric acid, valeric acid, caproic acid, enanthic acid, capric acid, caprylic acid, undecylic acid, lauric acid, tridecyl acid, myristic acid, pentadecylic acid, palmitic acid, margaric acid, or stearic acid. Specific examples thereof include a lactic acid residue, a 9-hydroxystearic acid residue, a 12-hydroxystearic acid residue, and a 6-hydroxycaproic acid residue.

The hydroxycarboxylic acid residue having 2 to 18 carbon atoms as L is preferably an aliphatic hydroxycarboxylic acid residue having 4 to 18 carbon atoms, and more preferably a 12-hydroxystearic acid residue.

The number of the repeating units as n is an integer in the range of 0 to 20, preferably an integer in the range of 1 to 20, and more preferably an integer in the range of 5 to 20.

The polyester of the present invention has a number average molecular weight (Mn), for example, in the range of 100 to 5,000, preferably in the range of 300 to 4,000, more preferably in the range of 500 to 3,000, and further preferably in the range of 800 to 2,400.

The number average molecular weight (Mn) is a value calculated based on polystyrene according to a gel permeation chromatography (GPC) measurement, and is measured by a method described in the section of Examples.

The acid value of the polyester of the present invention is more than 50, and is preferably 51 or more.

The upper limit of the acid value of the polyester of the present invention is not particularly limited, and, for example, 400 or less, and is preferably, more in the following order, 200 or less, 150 or less, 120 or less, 100 or less, and 95 or less.

The acid value of the polyester is determined by a method described in the section of Examples.

The hydroxy value of the polyester of the present invention may be, for example, 0 or more, preferably in the range of 10 to 100, more preferably in the range of 20 to 80, and further preferably in the range of 30 to 70.

The hydroxy value of the polyester is determined by a method described in the section of Examples.

The nature of the polyester of the present invention depends on the number average molecular weight and the composition, and, in general, is in the form of liquid, solid, paste, or the like at normal temperature.

The content of the fluidity modifier of the present invention is not particularly limited, and is, for example, in the range of 0.1 to 30 parts by mass of the fluidity modifier of the present invention relative to 100 parts by mass of the inorganic filler, preferably in the range of 0.1 to 10 parts by mass of the fluidity modifier of the present invention relative to 100 parts by mass of the inorganic filler, and more preferably in the range of 0.1 to 5.0 parts by mass of the fluidity modifier of the present invention relative to 100 parts by mass of the inorganic filler.

The polyester of the present invention is obtained using reaction raw materials containing an aliphatic dibasic acid and/or an aromatic dibasic acid, an aliphatic diol, and an optional hydroxycarboxylic acid. Here, the reaction raw materials mean raw materials that constitute the polyester of the present invention, and mean that a solvent and a catalyst which do not constitute the polyester are excluded. In addition, the "optional hydroxycarboxylic acid" means that the hydroxycarboxylic acid may be used or may not be used.

A method for producing the polyester of the present invention is not particularly limited, and the polyester can be produced by a known method or can be produced by a production method as described later.

The reaction raw materials of the polyester of the present invention may contain an aliphatic dibasic acid and/or an aromatic dibasic acid, an aliphatic diol, and an optional hydroxycarboxylic acid, and may contain another raw material.

The reaction raw materials of the polyester of the present invention contain an aliphatic dibasic acid and/or an aromatic dibasic acid, an aliphatic diol, and an optional hydroxycarboxylic acid preferably in an amount of 90% by mass or more based on the total amount of the reaction raw materials, and more preferably are constituted only of an aliphatic dibasic acid and/or an aromatic dibasic acid, an aliphatic diol, and an optional hydroxycarboxylic acid.

The aliphatic dibasic acid used in production of the polyester of the present invention is an aliphatic dibasic acid corresponding to the aliphatic dibasic acid residue having 2 to 12 carbon atoms as A, A₁, A₂, and A₃, and as the aliphatic dibasic acid used, one kind may be used alone or two or more kinds may be used in combination.

The aromatic dibasic acid used in production of the polyester of the present invention is an aromatic dibasic acid corresponding to the aromatic dibasic acid residue having 6 to 15 carbon atoms as A, A₁, A₂, and A₃, and as the aromatic dibasic acid used, one kind may be used alone or two or more kinds may be used in combination.

The aliphatic diol used in production of the polyester of the present invention is an aliphatic diol corresponding to the aliphatic diol residue having 2 to 9 carbon atoms as G, G₁, and G₂, and as the aliphatic diol used, one kind may be used alone or two or more kinds may be used in combination.

The hydroxycarboxylic acid used in production of the polyester of the present invention is a hydroxycarboxylic acid corresponding to the hydroxycarboxylic acid residue having 2 to 18 carbon atoms as L, and as the hydroxycarboxylic acid used, one kind may be used alone or two or more kinds may be used in combination.

The reaction raw materials used include derivatives, such as esters of the above compounds, acid chlorides of the above compounds, and acid anhydrides of the above compounds. For example, the hydroxycarboxylic acid includes a compound having a lactone structure, such as ε-caprolactone.

The polyester of the present invention can be produced by reacting an aliphatic dibasic acid and/or an aromatic dibasic acid, an aliphatic diol, and an optional hydroxycarboxylic acid which constitute the respective residues of the polyester of the present invention under such a condition that the equivalent of the carboxy groups contained in the reaction raw materials is more than the equivalent of the hydroxy groups.

The polyester of the present invention can also be produced by reacting an aliphatic dibasic acid and/or an aromatic dibasic acid, an aliphatic diol, and an optional hydroxycarboxylic acid which constitute the respective residues of the polyester of the present invention under such a condition that the equivalent of the hydroxy groups contained in the reaction raw materials is more than the equivalent of the carboxy groups to obtain a polyester having a hydroxy group at an end of the main chain, and then, with the obtained polyester, further reacting an aliphatic dibasic acid and/or an aromatic dibasic acid.

The polyester of the present invention is preferably a polyester that is obtained by using as reaction raw materials one or more aliphatic dibasic acids selected from the group consisting of succinic acid, sebacic acid, maleic acid, and adipic acid residue and one or more aliphatic diol selected from ethylene glycol, diethylene glycol, 1,2-propanediol, 1,3-propanediol, 1,2-butanediol, 1,3-butanediol, 2-methyl-1,3-propanediol, 1,4-butanediol, 1,5-pentanediol, 2,2-dimethyl-1,3-propanediol, 2,2-diethyl-1,3-propanediol, 2-n-butyl-2-ethyl-1,3-propanediol, 3-methyl-1,5-pentanediol, 1,6-hexanediol, cyclohexanedimethanol, 2,2,4-trimethyl-1,3-pentanediol, 2-ethyl-1,3-hexanediol, 2-methyl-1,8-octanediol, and 1,9-nonanediol.

The polyester of the present invention is more preferably a polyester obtained by using as reaction raw materials one or more aliphatic dibasic acid selected from the group consisting of succinic acid and sebacic acid and one or more aliphatic diol selected from ethylene glycol, diethylene glycol, 1,2-propanediol, 1,3-propanediol, 1,6-hexanediol, 3-methyl-1,5-pentanediol, 1,4-butanediol, and 1,3-butanediol.

Each of the reaction raw materials can be a biomass-derived one, and the resulting polyester can be a polyester having a biomass degree of 100%. Use of a polyester having a biomass degree of 100% for the biodegradable resin is preferable from the viewpoint of sustainability.

In production of the polyester of the present invention, the reaction of the reaction raw materials may be an esterification reaction, in the presence of an esterification catalyst as required, for example, at a temperature in the range of 180 to 250°C for a time period in the range of 10 to 25 hours.

Note that the conditions, such as temperature, time period, and the like, of the esterification reaction are not particularly limited, and may be appropriately set.

Examples of the esterification catalyst include a titanium-based catalyst, such as tetraisopropyl titanate or tetrabutyl titanate; a zinc-based catalyst, such as zinc acetate; a tin-based catalyst, such as dibutyl tin oxide; and an organic sulfonic acid-based catalyst, such as p-toluenesulfonic acid.

The amount of the esterification catalyst used is appropriately set, and, in general, is in the range of 0.001 to 0.1 parts by mass based on 100 parts by mass of the total amount of the reaction raw materials.

### (Inorganic filler)

The inorganic filler contained in the biodegradable resin composition of the present invention is not particularly limited, and examples thereof include calcium carbonate, talc, silica, alumina, clay, antimony oxide, aluminum hydroxide, magnesium hydroxide, hydrotalcite, calcium silicate, magnesium oxide, potassium titanate, barium titanate, titanium oxide, calcium oxide, magnesium oxide, manganese dioxide, boron nitride, and aluminum nitride.

As the inorganic filler, one kind may be used alone or two or more kinds may be used in combination.

The inorganic filler is preferably one or more selected from the group consisting of calcium carbonate, silica, alumina, aluminum hydroxide, barium titanate, talc, boron nitride, and aluminum nitride, and more preferably one or more selected from the group consisting of calcium carbonate, alumina, aluminum hydroxide, and talc.

The details of the shape, such as particle diameter, fiber length, and fiber diameter, of the inorganic filler are not particularly limited, and may be appropriately adjusted according to the intended application. In addition, the state of the surface treatment of the inorganic filler is also not particularly limited, and the surface may be modified, for example, with a saturated fatty acid or the like according to the intended application.

The content of the inorganic filler is, relative to 100 parts by mass of the biodegradable resin, for example, in the range of 1 to 200 parts by mass, and may be in the range of 1 to 100 parts by mass, in the range of 5 to 70 parts by mass, in the range of 10 to 60 parts by mass, or in the range of 15 to 55 parts by mass.

### (Biodegradable resin)

The biodegradable resin contained in the biodegradable resin composition of the present invention is selected from polylactic acid (PLA), polyethylene succinate (PES), polyethylene terephthalate-succinate (PETS), polybutylene succinate (PBS), polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate (PBSA), polybutylene succinate-carbonate (PEC), polybutylene succinate-adipate-terephthalate (PBSAT), polyethylene succinate-adipate-terephthalate (PESAT), polytetramethylene adipate-terephthalate (PTMAT), polyhydroxybutyric acid (PHB), polyhydroxybutyric acid-hydroxyhexanoic acid (PHBH), polycaprolactone (PCL), polycaprolactone-butylene succinate (PCLBS), and cellulose acetate.

The biodegradable resin used may be determined according to the intended application, and as the biodegradable resin, one kind may be used alone or two or more kinds may be used in combination.

The biodegradable resin is preferably one or more selected from the group consisting of polylactic acid, polybutylene succinate, polybutylene adipate terephthalate, polyhydroxybutyric acid-hydroxyhexanoic acid, polybutylene succinate adipate, and polyethylene terephthalate succinate.

Although the biodegradable resin was described, the biodegradable resin composition of the present invention may contain a non-biodegradable resin to the extent that the effect of the present invention is not impaired.

The non-biodegradable resin is not particularly limited, and examples thereof include a polyolefin, a polyester, a polysulfide, polyvinyl chloride, a modified polysulfide, a silicone resin, a modified silicone resin, an acrylic urethane resin, an epoxy resin, a polyurethane, an acrylic resin, a polyester, and an unsaturated polyester.

### (Plasticizer)

The biodegradable resin composition of the present invention may further contain a plasticizer.

Examples of the plasticizer include a benzoic acid ester, such as diethylene glycol dibenzoate; a phthalic acid ester, such as dibutyl phthalate (DBP), di-2-ethylhexyl phthalate (DOP), diisononyl phthalate (DINP), diisodecyl phthalate (DIDP), diundecyl phthalate (DUP), or ditridecyl phthalate (DTDP); a terephthalic acid ester, such as bis(2-ethylhexyl) terephthalate (DOTP); an isophthalic acid ester, such as bis(2-ethylhexyl) isophthalate (DOIP); a pyromellitic acid ester, such as tetra-2-ethylhexyl pyromellitate (TOPM); an aliphatic dibasic acid ester, such as di-2-ethylhexyl adipate (DOA), diisononyl adipate (DINA), diisodecyl adipate (DIDA), di-2-ethylhexyl sebacate (DOS), or diisononyl sebacate (DINS); a phosphoric acid ester, such as tri-2-ethylhexyl phosphate (TOP) or tricresyl phosphate (TCP); a polyhydric alcohol alkyl ester, such as pentaerythritol; a polyester having a molecular weight of 800 to 4,000 synthesized by polyesterification of a dibasic acid, such as adipic acid, and a glycol; an epoxidized ester, such as epoxidized soybean oil or epoxidized linseed oil; an alicyclic dibasic acid, such as hexahydrophthalic acid diisononyl ester; a fatty acid glycol ester, such as 1.4-butanediol dicaprate; acetyl tributyl citrate (ATBC); a chlorinated paraffin obtained by chlorinating paraffin wax or n-paraffin; a chlorinated fatty acid ester, such as chlorinated stearic acid ester; and a higher fatty acid ester, such as butyl oleate.

The plasticizer used may be determined according to the intended application, and as the plasticizer, one kind may be used alone or two or more kinds may be used in combination.

The content of the plasticizer is not particularly limited, and is, for example, in the range of 5 to 300 parts by mass of the plasticizer relative to 100 parts by mass of the inorganic filler, and preferably in the range of 10 to 200 parts by mass of the plasticizer relative to 100 parts by mass of the inorganic filler.

### (Other additives)

Additives contained in the biodegradable resin composition of the present invention are not limited to the fluidity modifier and the plasticizer, and an additive other than those additives can be contained.

Examples of the other additives include a viscosity reducer, a flame retardant, a stabilizer, a stabilizing aid, a colorant, a processing aid, a filler, an antioxidant (aging retardant), a UV absorber, a photostabilizer, a lubricant, an antistatic agent, and a crosslinking aid.

### [Method for producing biodegradable resin composition]

A method for producing the biodegradable resin composition of the present invention is not particularly limited.

For example, the biodegradable resin composition of the present invention can be obtained by a method in which a biodegradable resin, an inorganic filler, and a fluidity modifier, and as required, a plasticizer and the above other additives, are melt-kneaded using a melt-kneader, such as a single screw extruder, a twin screw extruder, a banbury mixer, a brabender, or various kneaders.

### [Molded product of biodegradable resin composition]

The biodegradable resin composition of the present invention can be molded by various molding methods to be applied to general-purpose plastics.

Examples of the molding method include compression molding (compression molding, laminate molding, stampable molding), injection molding, extrusion molding and co-extrusion molding (film molding, laminate molding, pipe molding, electric wire/cable molding, and profile molding by an inflation method or a T-die method), hot press molding, hollow molding (various types of blow molding), calender molding, solid molding (uniaxial drawing molding, biaxial drawing molding, rolling molding, stretch orientation nonwoven fabric molding, heat molding (vacuum forming, pressure forming), plastic working, powder molding (rotational molding), and various types of nonwoven fabric molding (dry method, bonding method, entanglement method, spun bonding method, etc.).

Injection molding, extrusion molding, compression molding, or hot press molding is suitably applied. As a specific shape, a sheet, film, or container is preferred.

Secondary processing may be applied to the resulting molded product. Examples of the secondary processing include embossing, painting, bonding, printing, metallizing (plating, etc.), mechanical processing, and surface treatment (antistatic treatment, corona discharge treatment, plasma treatment, photochromism treatment, physical deposition, chemical deposition, coating, etc.).

The molded product obtained from the biodegradable resin composition of the present invention can contain an inorganic filler at a high filling rate, and thus, a superior heat resistance, chemical resistance, and impact resistance can be exhibited while the amount of the plastics themselves can be reduced. In addition, since the molded product is composed of the biodegradable resin and thus is degradable, the molded product places a small burden on the environment.

The molded product obtained from the biodegradable resin composition of the present invention is suitably used for a wide variety of applications, such as a packaging material for packaging a liquid product, a powder product, or a solid product, an agricultural material, and a construction material.

Specific examples of the applications include an injection molded product (a tray of a fresh food, a container of a fast food, a container of a coffee capsule, a cutlery, an outdoor leisure product, etc.), an extrusion molded product (a film, sheet, a fishing line, a fishing net, a vegetation net, a secondary processing sheet, a water retention sheet, etc.), and a hollow molded product (a bottle, etc.).

The application is not limited to the above, and the molded product can be used for an agricultural film, a coating material, a fertilizer coating material, a raising pot, a laminate film, a plate, a starched sheet, a monofilament, a nonwoven fabric, a flat yarn, a staple, a crimped fiber, a tape with lines, a split yarn, a complex fiber, a blow bottle, a shopping bag, a garbage bag, a compost bag, a cosmetic container, a detergent container, a bleach container, a rope, a binding material, a sanitary cover stocking material, a cold box, a cushion material film, a multifilament, a synthetic paper, and, for medical use, a surgical suture, a stich, an artificial bone, an artificial skin, a microcapsule, and a wound dressing.

### Examples

The present invention will be specifically described below with reference to Examples and Comparative Examples.

The present invention is not limited to the following Examples.

In Examples of this application, the acid values and hydroxy values are values evaluated by the following method.

### [Method for measuring acid value]

Acid values were measured by a method according to JIS K0070-1992.

### [Method for measuring hydroxy value]

Hydroxy values were measured by a method according to JIS K0070-1992.

In Examples of this application, the number average molecular weights of polyesters are values calculated based on polystyrene according to a GPC measurement, and the measurement conditions are as follows.

### [GPC measurement conditions]

Measurement apparatus: high speed GPC apparatus "HLC-8320GPC" manufactured by TOSOH CORPORATION
Column: "TSK GURDCOLUMN SuperHZ-L" manufactured by TOSOH CORPORATION + "TSKgel SuperHZM-M" manufactured by TOSOH CORPORATION + "TSKgel SuperHZM-M" manufactured by TOSOH CORPORATION + "TSKgel SuperHZ-2000" manufactured by TOSOH CORPORATION + "TSKgel SuperHZ-2000" manufactured by TOSOH CORPORATION
Detector: RI (differential refractometer)
Data processer: "EcoSEC Data Analysis version 1.07" manufactured by TOSOH CORPORATION
Column temperature: 40°C
Eluent: tetrahydrofuran
Flow rate: 0.35 mL/min.
Measurement sample: 7.5 mg of a sample was dissolved in 10 ml of tetrahydrofuran, and the resulting solution was filtered with a microfilter to provide a measurement sample.
Injection of sample: 20 µl
Standard: the following monodisperse polystyrenes having known molecular weights were used according to the measurement manual of the "HLC-8320GPC".

### (Monodisperse polystyrenes)

"A-300" manufactured by TOSOH CORPORATION
"A-500" manufactured by TOSOH CORPORATION
"A-1000" manufactured by TOSOH CORPORATION
"A-2500" manufactured by TOSOH CORPORATION
"A-5000" manufactured by TOSOH CORPORATION
"F-1" manufactured by TOSOH CORPORATION
"F-2" manufactured by TOSOH CORPORATION
"F-4" manufactured by TOSOH CORPORATION
"F-10" manufactured by TOSOH CORPORATION
"F-20" manufactured by TOSOH CORPORATION
"F-40" manufactured by TOSOH CORPORATION
"F-80" manufactured by TOSOH CORPORATION
"F-128" manufactured by TOSOH CORPORATION
"F-288" manufactured by TOSOH CORPORATION

### (Synthetic Example 1: synthesis of fluidity modifier A)

Into a four-neck flask with an inner capacity of 2 liters equipped with a thermometer, a stirrer, and a reflux condenser, 649.0 g of succinic acid, 726.6 g of diethylene glycol, and 0.043 g of tetraisopropyl titanate as an esterification catalyst were charged, and the temperature was increased stepwise to 220°C with stirring under nitrogen flow to perform a condensation reaction for 19.5 hours in total. Into a part of 250 g of the resulting reaction product, 26.2 g of maleic anhydride was further charged, and the reaction was completed at 120°C to obtain a fluidity modifier A (acid value: 52, hydroxy value: 60, number average molecular weight: 1,072).

### (Synthetic Example 2: synthesis of fluidity modifier B)

Into a four-neck flask with an inner capacity of 2 liters equipped with a thermometer, a stirrer, and a reflux condenser, 876.8 g of adipic acid, 612.7 g of 1,3-butanediol, 78.7 g of neopentyl glycol, and 0.047 g of tetraisopropyl titanate as an esterification catalyst were charged, and the temperature was increased stepwise to 220°C with stirring under nitrogen flow to perform a condensation reaction for 14 hours in total. Into a part of 250 g of the resulting reaction product, 26.2 g of maleic anhydride was further charged, and the reaction was completed at 120°C to obtain a fluidity modifier B (acid value: 54, hydroxy value: 50, number average molecular weight: 1,250).

### (Synthetic Example 3: synthesis of fluidity modifier C)

Into a four-neck flask with an inner capacity of 3 liters equipped with a thermometer, a stirrer, and a reflux condenser, 1618.0 g of sebacic acid, 814.6 g of propylene glycol, and 0.146 g of tetraisopropyl titanate as an esterification catalyst were charged, and the temperature was increased stepwise to 220°C with stirring under nitrogen flow to perform a condensation reaction for 18.5 hours in total. Into a prat of 300 g of the resulting reaction product, 31.5 g of maleic anhydride was further charged, and the reaction was completed at 125°C to obtain a fluidity modifier C (acid value: 55, hydroxy value: 68, number average molecular weight: 1,300).

### (Synthetic Example 4: synthesis of fluidity modifier D)

Into a four-neck flask with an inner capacity of 2 liters equipped with a thermometer, a stirrer, and a reflux condenser, 649.0 g of succinic acid, 726.6 g of diethylene glycol, and 0.043 g of tetraisopropyl titanate as an esterification catalyst were charged, and the temperature was increased stepwise to 220°C with stirring under nitrogen flow to perform a condensation reaction for 19.5 hours in total. Into a part of 250 g of the resulting reaction product, 39.3 g of maleic anhydride was further charged, and the reaction was completed at 120°C to obtain a fluidity modifier D (acid value: 74, hydroxy value: 47, number average molecular weight: 1,053).

### (Comparative Synthetic Example 1: synthesis of fluidity modifier A')

Into a four-neck flask with an inner capacity of 2 liters equipped with a thermometer, a stirrer, and a reflux condenser, 649.0 g of succinic acid, 726.6 g of diethylene glycol, and 0.043 g of tetraisopropyl titanate as an esterification catalyst were charged, and the temperature was increased stepwise to 220°C with stirring under nitrogen flow to perform a condensation reaction for 19.5 hours in total. Into a prat of 210 g of the resulting reaction product, 11.0 g of maleic anhydride was charged, and the reaction was completed at 120°C to obtain a fluidity modifier A' (acid value: 27, hydroxy value: 85, number average molecular weight: 1,319).

### (Comparative Synthetic Example 2: synthesis of fluidity modifier B')

Into a four-neck flask with an inner capacity of 2 liters equipped with a thermometer, a stirrer, and a reflux condenser, 876.8 g of adipic acid, 612.7 g of 1,3-butanediol, 78.7 g of neopentyl glycol, and 0.047 g of tetraisopropyl titanate as an esterification catalyst were charged, and the temperature was increased stepwise to 220°C with stirring under nitrogen flow to perform a condensation reaction for 14 hours in total. Into a part of 250 g of the resulting reaction product, 13.1 g of maleic anhydride was further charged and the reaction was completed at 120°C to obtain a fluidity modifier B' (acid value: 29, hydroxy value: 73, number average molecular weight: 1,290).

### (Example 1: preparation and evaluation of biodegradable resin composition)

After kneading 100 parts by mass of polybutylene succinate ("Bio-PBS FZ71PM/PB" manufactured by Mitsubishi Chemical Corporation), 30 parts by mass of calcium bicarbonate ("Super S" manufactured by Maruo Calcium Co., Ltd.), and 1 part by mass of the fluidity modifier A of Synthetic Example 1 with a mixer at 120°C for 10 minutes, the mixture was formed into a press sheet having a thickness of 1 mm with a hot press machine. The resulting sheet was cut into a 5-mm square, and was dried with a geer oven at 80°C for 2 hours to produce a biodegradable resin composition pellet sample A.

The resulting biodegradable resin composition pellet sample A was put in a melt indexer ("F-F01" manufactured by TOYO SEIKI CO., LTD., orifice bore: 2.090 mm, cylinder temperature: 190°C), a load of 2160 g was applied, and after preheating for 4 minutes, the melt flow rate was measured. The results are shown in Table 1.

### (Examples 2-4 and Comparative Examples 1-3)

In place of the biodegradable resin composition pellet sample A, biodegradable resin composition pellet samples having compositions shown in Table 1 were prepared in the same manner as in Example 1 and were evaluated. The results are shown in Table 1.

**[Table 1]**

| | | Example 1 | Example 2 | Example 3 | Example 4 | Comparative Example 1 | Comparative Example 2 | Comparative Example 3 |
|---|---|---|---|---|---|---|---|---|
| | PBS | 100 | 100 | 100 | 100 | 100 | 100 | 100 |
| | Calcium carbonate | 30 | 30 | 30 | 30 | 30 | 30 | 30 |
| | Fluidity modifier A | 1 | | | | | | |
| | Fluidity modifier B | | 1 | | | | | |
| parts by mass | Fluidity modifier C | | | 1 | | | | |
| | Fluidity modifier D | | | | 1 | | | |
| | Fluidity modifier A' | | | | | | 1 | |
| | Fluidity modifier B' | | | | | | | 1 |
| MFR [g/10 min.] | | 23 | 23 | 23 | 22 | 14 | 20 | 19 |

It can be seen that, in Examples 1-4 in which a polyester having a carboxy group at an end and having an acid value of more than 50 is added as a fluidity modifier, a high MFR can be achieved. On the other hand, in Comparative Example 1 in which no fluidity modifier is contained, MFR is low. In addition, in Comparative Examples 2 and 3 in which the fluidity modifier is a polyester having a carboxy group at an end but having an acid value of 50 or less, a high MFR cannot be achieved.

## Claims

1. A biodegradable resin composition comprising a biodegradable resin, an inorganic filler, and a fluidity modifier,
the fluidity modifier being a polyester represented by the following general formula (1) and/or a polyester represented by the following general formula (2), the polyester having an acid value of more than 50: 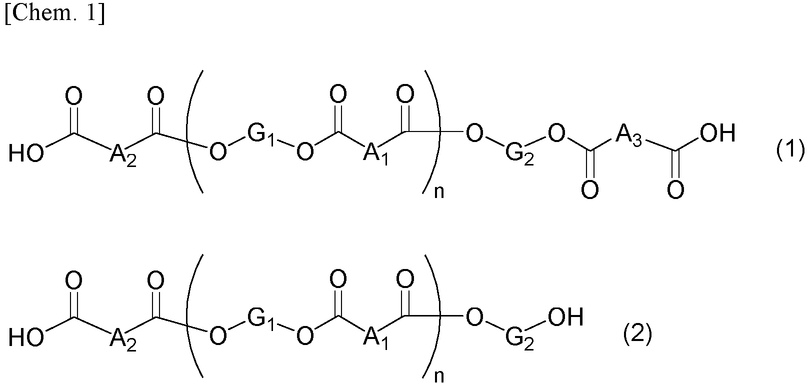
wherein in the general formulae (1) and (2),
A₁, A₂ and A₃ are each independently an aliphatic dibasic acid residue having 2 to 12 carbon atoms or an aromatic dibasic acid residue having 6 to 15 carbon atoms,
G₁ and G₂ are each independently an aliphatic diol residue having 2 to 9 carbon atoms, and
n represents the number of repeating units and is an integer in the range of 0 to 20,
provided that A₁ and G₁ may each be the same or different for each repeating unit in parentheses;
the biodegradable resin is selected from polylactic acid, polyethylene succinate, polyethylene terephthalate-succinate, polybutylene succinate, polybutylene adipate-terephthalate, polyethylene adipate-terephthalate, polybutylene succinate-terephthalate, polyethylene succinate-terephthalate, polybutylene succinate-adipate, polybutylene succinate-carbonate, polybutylene succinate-adipate-terephthalate, polyethylene succinate-adipate-terephthalate, polytetramethylene adipate-terephthalate, polyhydroxybutyric acid, polyhydroxybutyric acid-hydroxyhexanoic acid, polycaprolactone, polycaprolactone-butylene succinate, and cellulose acetate, and as the biodegradable resin, one kind may be used alone or two or more kinds may be used in combination;
wherein the acid value is measured by a method according to JIS K0070-1992.

2. The biodegradable resin composition according to claim 1, wherein the aliphatic dibasic acid residue is a succinic acid residue, a sebacic acid residue, a maleic acid residue, or an adipic acid residue, and
the aliphatic diol residue is an ethylene glycol residue, a diethylene glycol residue, a 1,2-propanediol residue, a 1,3-propanediol residue, a 1,2-butanediol residue, a 1,3-butanediol residue, a 2-methyl-1,3-propanediol residue, a 1,4-butanediol residue, a 1,5-pentanediol residue, a 2,2-dimethyl-1,3-propanediol residue, a 2,2-diethyl-1,3-propanediol residue, a 2-n-butyl-2-ethyl-1,3-propanediol residue, a 3-methyl-1,5-pentanediol residue, a 1,6-hexanediol residue, a cyclohexanedimethanol residue, a 2,2,4-trimethyl-1,3-pentanediol residue, a 2-ethyl-1,3-hexanediol residue, a 2-methyl-1,8-octanediol residue, or a 1,9-nonanediol residue.

3. The biodegradable resin composition according to any one of claims 1 or 2, wherein the aliphatic dibasic acid residue is a succinic acid residue or a sebacic acid residue, and
the aliphatic diol residue is an ethylene glycol residue, a diethylene glycol residue, a 1,2-propanediol residue, a 1,3-propanediol residue, a 1,6-hexanediol residue, a 3-methyl-1,5-pentanediol residue, a 1,4-butanediol residue, or a 1,3-butanediol residue.

4. The biodegradable resin composition according to any one of claims 1 to 3, wherein the polyester has a number average molecular weight in the range of 300 to 4,000; wherein the number average molecular weight is calculated based on polystyrene standards according to a GPC measurement under the measurement conditions indicated in the description.

5. The biodegradable resin composition according to any one of claims 1 to 4, wherein the inorganic filler is one or more selected from the group consisting of calcium carbonate, silica, alumina, aluminum hydroxide, talc, barium titanate, boron nitride, and aluminum nitride.

6. The biodegradable resin composition according to any one of claims 1 to 5, wherein the biodegradable resin is one or more selected from the group consisting of polylactic acid, polybutylene succinate, polybutylene adipate terephthalate, polyhydroxybutyric acid-hydroxyhexanoic acid, polybutylene succinate adipate, and polyethylene terephthalate succinate.

7. The biodegradable resin composition according to any one of claims 1 to 6, wherein the fluidity modifier is contained in an amount in the range of 0.1 to 30 parts by mass relative to 100 parts by mass of the inorganic filler.

8. A molded product of the biodegradable resin composition according to any one of claims 1 to 7.

## Patentansprüche

1. Biologisch abbaubare Harzzusammensetzung, umfassend ein biologisch abbaubares Harz, einen anorganischen Füllstoff und einen Fließfähigkeitsmodifikator,
wobei der Fließfähigkeitsmodifikator ein Polyester der folgenden allgemeinen Formel (1) und/oder ein Polyester der folgenden allgemeinen Formel (2) ist, wobei der Polyester eine Säurezahl von mehr als 50 aufweist: 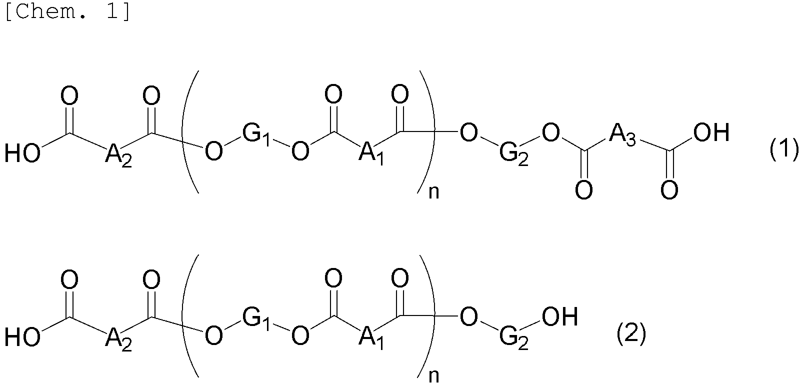
wobei in den allgemeinen Formeln (1) und (2)
A₁, A₂ und A₃ jeweils unabhängig voneinander ein aliphatischer zweibasiger Säurerest mit 2 bis 12 Kohlenstoffatomen oder ein aromatischer zweibasiger Säurerest mit 6 bis 15 Kohlenstoffatomen sind,
G₁ und G₂ jeweils unabhängig voneinander ein aliphatischer Diolrest mit 2 bis 9 Kohlenstoffatomen sind, und
n die Anzahl der Wiederholungseinheiten darstellt und eine ganze Zahl im Bereich von 0 bis 20 ist,
mit der Maßgabe, dass A₁ und G₁ für jede in Klammern stehende Wiederholungseinheit jeweils gleich oder unterschiedlich sein können;
das biologisch abbaubare Harz ausgewählt ist aus Polymilchsäure, Polyethylensuccinat, Polyethylenterephthalatsuccinat, Polybutylensuccinat, Polybutylenadipatterephthalat, Polyethylenadipatterephthalat, Polybutylensuccinatterephthalat, Polyethylensuccinatterephthalat, Polybutylensuccinatadipat, Polybutylensuccinatcarbonat, Polybutylensuccinatadipatterephthalat, Polyethylensuccinatadipatterephthalat, Polytetramethylenadipatterephthalat, Polyhydroxybuttersäure, Polyhydroxybuttersäure-Hydroxyhexansäure, Polycaprolacton, Polycaprolacton-Butylensuccinat und Celluloseacetat, wobei als biologisch abbaubares Harz eine Sorte allein oder zwei oder mehr Sorten in Kombination verwendet werden können;
wobei die Säurezahl nach einem Verfahren gemäß JIS K0070-1992 bestimmt wird.

2. Biologisch abbaubare Harzzusammensetzung nach Anspruch 1, wobei der aliphatische zweibasige Säurerest ein Bernsteinsäurerest, ein Sebacinsäurerest, ein Maleinsäurerest oder ein Adipinsäurerest ist und
der aliphatische Diolrest ein Ethylenglykolrest, ein Diethylenglykolrest, ein 1,2-Propandiolrest, ein 1,3-Propandiolrest, ein 1,2-Butandiolrest, ein 1,3-Butandiolrest, ein 2-Methyl-1,3-propandiolrest, ein 1,4-Butandiolrest, ein 1,5-Pentandiolrest, ein 2,2-Dimethyl-1,3-propandiolrest, ein 2,2-Diethyl-1,3-propandiolrest, ein 2-n-Butyl-2-ethyl-1,3-propandiolrest, ein 3-Methyl-1,5-pentandiolrest, einen 1,6-Hexandiolrest, einen Cyclohexandimethanolrest, einen 2,2,4-Trimethyl-1,3-pentandiolrest, einen 2-Ethyl-1,3-hexandiolrest, einen 2-Methyl-1,8-octandiolrest oder einen 1,9-Nonandiolrest.

3. Biologisch abbaubare Harzzusammensetzung nach einem der Ansprüche 1 oder 2, wobei der aliphatische zweibasige Säurerest ein Bernsteinsäurerest oder ein Sebacinsäurerest ist und
der aliphatische Diolrest ein Ethylenglykolrest, ein Diethylenglykolrest, ein 1,2-Propandiolrest, ein 1,3-Propandiolrest, ein 1,6-Hexandiolrest, ein 3-Methyl-1,5-pentandiolrest, ein 1,4-Butandiolrest oder ein 1,3-Butandiolrest ist.

4. Biologisch abbaubare Harzzusammensetzung gemäß einem der Ansprüche 1 bis 3, wobei der Polyester ein zahlengemitteltes Molekulargewicht im Bereich von 300 bis 4.000 aufweist; wobei das zahlengemittelte Molekulargewicht nach Polystyrol-Standards gemäß einer GPC-Messung unter den in der Beschreibung angegebenen Messbedingungen berechnet wird.

5. Biologisch abbaubare Harzzusammensetzung nach einem der Ansprüche 1 bis 4, wobei der anorganische Füllstoff einer oder mehrere aus der Gruppe bestehend aus Calciumcarbonat, Siliziumdioxid, Aluminiumoxid, Aluminiumhydroxid, Talk, Bariumtitanat, Bornitrid und Aluminiumnitrid ist.

6. Biologisch abbaubare Harzzusammensetzung nach einem der Ansprüche 1 bis 5, wobei das biologisch abbaubare Harz eines oder mehrere aus der Gruppe bestehend aus Polymilchsäure, Polybutylensuccinat, Polybutylenadipatterephthalat, Polyhydroxybuttersäure-Hydroxyhexansäure, Polybutylensuccinatadipat und Polyethylenterephthalatsuccinat ausgewählt ist.

7. Biologisch abbaubare Harzzusammensetzung nach einem der Ansprüche 1 bis 6, wobei der Fließfähigkeitsmodifikator in einer Menge im Bereich von 0,1 bis 30 Massenteilen, bezogen auf 100 Massenteile des anorganischen Füllstoffs, enthalten ist.

8. Formkörper aus der biologisch abbaubaren Harzzusammensetzung nach einem der Ansprüche 1 bis 7.

## Revendications

1. Composition de résine biodégradable comprenant une résine biodégradable, une charge inorganique et un modificateur de fluidité,
le modificateur de fluidité étant un polyester représenté par la formule générale (1) suivante et/ou un polyester représenté par la formule générale (2) suivante, le polyester ayant un indice d'acide supérieur à 50 : 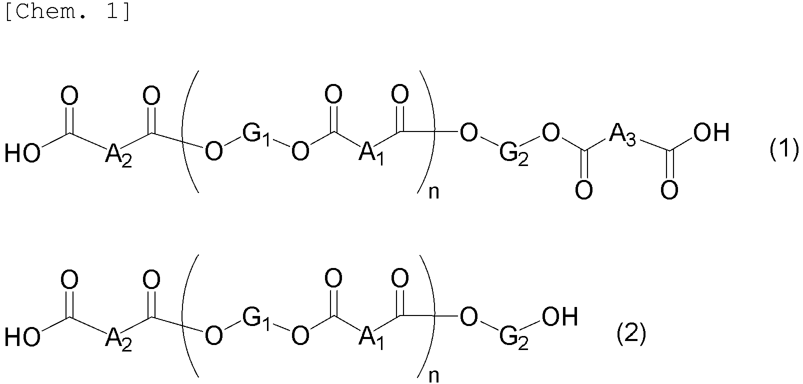
dans lesquelles, dans les formules générales (1) et (2),
A₁, A₂ et A₃ représentent chacun, indépendamment, un résidu d'acide dibasique aliphatique comportant de 2 à 12 atomes de carbone ou un résidu d'acide dibasique aromatique comportant de 6 à 15 atomes de carbone,
G₁ et G₂ représentent chacun, indépendamment l'un de l'autre, un résidu de diol aliphatique comportant de 2 à 9 atomes de carbone, et
n représente le nombre d'unités répétitives et est un nombre entier compris entre 0 et 20,
à condition que A₁ et G₁ puissent être identiques ou différents pour chaque unité répétitive entre parenthèses ;
la résine biodégradable est choisie parmi l'acide polylactique, le polyéthylène succinate, le polyéthylène téréphtalate-succinate, le polybutylène succinate, le polybutylène adipate-téréphtalate, le polyéthylène adipate-téréphtalate, le polybutylène succinate-téréphtalate, le polyéthylène succinate-téréphtalate, le polybutylène succinate-adipate, le polybutylène succinate-carbonate, le polybutylène succinate-adipate-téréphtalate, le polyéthylène succinate-adipate-téréphtalate, le polytétraméthylène adipate-téréphtalate, l'acide polyhydroxybutyrique, l'acide polyhydroxybutyrique-acide hydroxyhexanoïque, le polycaprolactone, le polycaprolactone-succinate de butylène et l'acétate de cellulose, et en tant que résine biodégradable, un seul type peut être utilisé seul ou deux types ou plus peuvent être utilisés en combinaison ;
dans laquelle l'indice d'acide est mesuré selon une méthode conforme à la norme JIS K0070-1992.

2. Composition de résine biodégradable selon la revendication 1, dans laquelle le résidu d'acide dibasique aliphatique est un résidu d'acide succinique, un résidu d'acide sébacique, un résidu d'acide maléique ou un résidu d'acide adipique, et
le résidu de diol aliphatique est un résidu d'éthylène glycol, un résidu de diéthylène glycol, un résidu de 1,2-propanediol, un résidu de 1,3-propanediol, un résidu de 1,2-butanediol, un résidu de 1,3-butanediol, un résidu de 2-méthyl-1,3-propanediol, un résidu de 1,4-butanediol, un résidu de 1,5-pentanediol, un résidu de 2,2-diméthyl-1,3-propanediol, un résidu de 2,2-diéthyl-1,3-propanediol, un résidu de 2-n-butyl-2-éthyl-1,3-propanediol, un résidu de 3-méthyl-1,5-pentanediol, un résidu de 1,6-hexanediol, un résidu de cyclohexanediméthanol, un résidu de 2,2,4-triméthyl-1,3-pentanediol, un résidu de 2-éthyl-1,3-hexanediol, un résidu de 2-méthyl-1,8-octanediol ou un résidu de 1,9-nonanediol.

3. Composition de résine biodégradable selon l'une quelconque des revendications 1 ou 2, dans laquelle le résidu d'acide dibasique aliphatique est un résidu d'acide succinique ou un résidu d'acide sébacique, et
le résidu de diol aliphatique est un résidu d'éthylène glycol, un résidu de diéthylène glycol, un résidu de 1,2-propanediol, un résidu de 1,3-propanediol, un résidu de 1,6-hexanediol, un résidu de 3-méthyl-1,5-pentanediol, un résidu de 1,4-butanediol ou un résidu de 1,3-butanediol.

4. Composition de résine biodégradable selon l'une quelconque des revendications 1 à 3, dans laquelle le polyester présente une masse molaire moyenne en nombre comprise entre 300 et 4 000 ; dans laquelle la masse molaire moyenne en nombre est calculée sur la base d'étalons de polystyrène selon une mesure par CPG dans les conditions de mesure indiquées dans la description.

5. Composition de résine biodégradable selon l'une quelconque des revendications 1 à 4, dans laquelle la charge inorganique est un ou plusieurs composés choisis dans le groupe constitué par le carbonate de calcium, la silice, l'alumine, l'hydroxyde d'aluminium, le talc, le titanate de baryum, le nitrure de bore et le nitrure d'aluminium.

6. Composition de résine biodégradable selon l'une quelconque des revendications 1 à 5, dans laquelle la résine biodégradable est choisie parmi un ou plusieurs éléments du groupe constitué par l'acide polylactique, le polybutylène succinate, le polybutylène adipate téréphtalate, l'acide polyhydroxybutyrique-acide hydroxyhexanoïque, le polybutylène succinate adipate et le polyéthylène téréphtalate succinate.

7. Composition de résine biodégradable selon l'une quelconque des revendications 1 à 6, dans laquelle le modificateur de fluidité est présent en une quantité comprise entre 0,1 et 30 parties en masse pour 100 parties en masse de la charge inorganique.

8. Produit moulé constitué de la composition de résine biodégradable selon l'une quelconque des revendications 1 à 7.
